# EUROPEAN PATENT APPLICATION

(11) **EP 3 654 707 A1**
(43) Date of publication of application: **20.05.2020**
(21) Application number: 17917329.9
(22) Date of filing: 10.07.2017
(51) Int. Cl.: H04W 72/04, H04W 28/06

(54) **USER TERMINAL AND WIRELESS COMMUNICATION METHOD**

(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2017/025186
(87) International publication number: WO 2019/012594

(57) **Abstract**

A user terminal (20) includes a reception section (202) that receives downlink signals including downlink control signals and downlink data signals from a radio base station, and a demodulation and decoding section (205) that performs demodulation and decoding on the downlink data signals by using the downlink control signals. The downlink signals are mapped to any one of the downlink control signals and the downlink data signals in a first known period and are mapped to the downlink data signals in a second period. The demodulation and decoding section (205) extracts the downlink control signals by performing demodulation and blind decoding on the signals of the first period.

## Description

### Technical Field

The present invention relates to a user terminal and a radio communication method.

### Background Art

Long Term Evolution (LTE) has been specified for achieving a higher data rate, lower latency, and the like in a Universal Mobile Telecommunications System (UMTS) network (see Non-Patent Literature (hereinafter referred to as "NPL") 1). Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio Access Technology (New-RAT)), and the like.

In a radio communication system, control signals on which control information is transmitted are transmitted and received between a radio base station and a user terminal in addition to data signals on which data is transmitted. For example, in LTE, mapping of physical control channels (for example, Physical Downlink Control Channels (PDCCHs)) including control signals to a predetermined resource (for example, one to three symbols in a beginning part of a resource block) in a resource block defined in a time direction and a frequency direction has been examined (see Non-Patent Literature (hereinafter referred to as "NPL") 2, and Non-Patent Literature (hereinafter referred to as "NPL") 3).

### Citation List

### Non-Patent Literature

### NPL 1

3GPP TS 36.300 v14.3.0, "Evolved Universal Terrestrial Radio Access (E-UTRA) and Evolved Universal Terrestrial Radio Access Network (E-UTRAN); Overall description; Stage 2 (Release 14)," June 2017

### NPL 2

3GPP TS 36.211 v14.2.0, "Evolved Universal Terrestrial Radio Access (E-UTRA); Physical channels and modulation (Release 14)," March 2017

### NPL 3

3GPP TS 36.213 v14.2.0, "Evolved Universal Terrestrial Radio Access (E-UTRA); Physical layer procedures (Release 14)," March 2017

### Summary of Invention

### Technical Problem

In a radio communication system (for example, 5G) of the related art, it is necessary to flexibly change the configuration of physical control channels according to various requirements (for example, a communication speed, communication capacity, a delay time, and the number of user terminals connected to a radio base station).

An aspect of the present invention provides a user terminal and a radio communication method capable of flexibly changing the configuration of physical control channels in a radio communication system of the related art.

### Solution to Problem

A user terminal according to one aspect of the present invention includes: a reception section that receives a downlink signal including a downlink control signal and a downlink data signal from a radio base station; and a demodulation and decoding section that performs demodulation and decoding on the downlink data signal, using the downlink control signal, in which any one of the downlink control signal and the downlink data signal is mapped to a known first period in the downlink signal, and the downlink data signal is mapped to a second period in the downlink signal, and the demodulation and decoding section performs demodulation and blind decoding on the signal of the first period and extracts the downlink control signal.

### Advantageous Effects of Invention

According to one aspect of the present invention, it is possible to provide a user terminal and a radio communication method capable of flexibly changing the configuration of physical control channels.

### Brief Description of Drawings

FIG. 1 is a block diagram illustrating an example of the entire configuration of a radio base station according to an embodiment of the present invention;
FIG. 2 is a block diagram illustrating an example of the entire configuration of a user terminal according to the embodiment of the present invention;
FIG. 3 is a diagram illustrating an example of transmittable periods of physical control channels and transmission signals according to a first example of the embodiment of the present invention;
FIG. 4 is a diagram illustrating an example of transmission periods of physical control channels and transmission signals according to a second example of the embodiment of the present invention;
FIG. 5 is a diagram illustrating an example of transmittable periods of physical control channels and transmission signals according to a third example of the embodiment of the present invention;
FIG. 6 is a diagram illustrating an example of transmittable periods of physical control channels and transmission signals according to a fourth example of the embodiment of the present invention; and
FIG. 7 is a diagram illustrating an example of a hardware configuration of the radio base station and the user terminal according to the embodiment of the present invention.

### Description of Embodiments

Hereinafter, an embodiment of the present invention will be described in detail with reference to the accompanying drawings.

### (Embodiment)

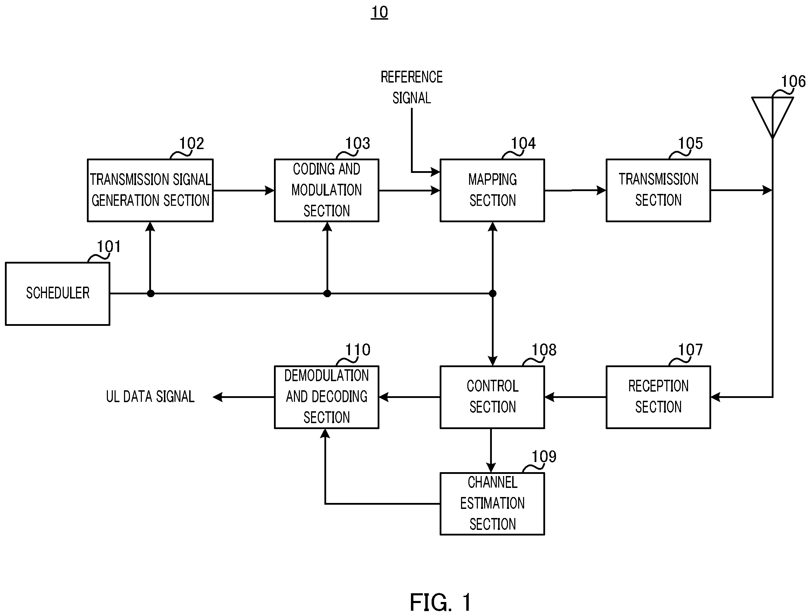

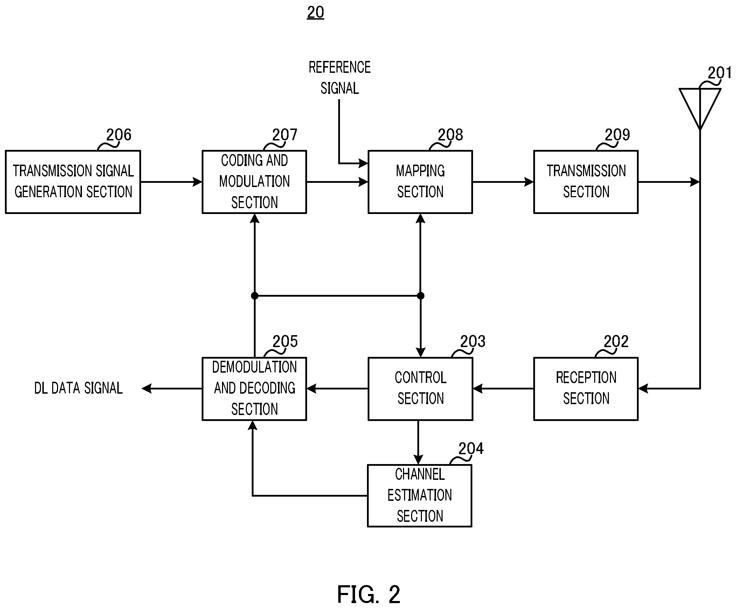

A radio communication system according to the present embodiment includes at least radio base station 10 illustrated in FIG. 1 and user terminal 20 (for example, referred to as "User Equipment (UE)") illustrated in FIG. 2. User terminal 20 is connected to radio base station 10.

Radio base station 10 transmits, to user terminal 20, downlink (DL) control signals including Downlink Control Information (DCI) by using physical control channels (for example, Physical Downlink Control Channels (PDCCHs)) of a DL, and transmits DL data signals and Demodulation Reference Signals (DMRSs) for demodulating the DL data signals by using physical data channels (for example, Physical Downlink Shared Channels (PDSCHs)) of the DL. User terminal 20 transmits, to radio base station 10, uplink (UL) control signals including Uplink Control Information (UCI) by using physical control channels (for example, Physical Uplink Control Channels (PUCCHs)) of an UL or physical data channels (for example, Physical Uplink Shared Channels (PUSCHs)) of the UL, and transmits UL data signals and DMRSs by using physical data channels (for example, Physical Uplink Shared Channels (PUSCHs)) of the UL.

Note that, the channels of the DL and the channels of the UL transmitted and received by radio base station 10 and user terminal 20 are not limited to the PDCCHs, the PDSCHs, the PUCCHs, the PUSCHs, and the like, and may be, for example, other channels such as a Physical Broadcast Channels (PBCHs) and Random Access Channels (RACHs).

Although an example in which a single carrier is used for performing communication between radio base station 10 and user terminal 20 will be described in the present embodiment, the present invention is not limited thereto. Signal waveforms of the DL/UL generated in radio base station 10 and user terminal 20 may be signal waveforms based on Orthogonal Frequency Division Multiplexing (OFDM) modulation, may be signal waveforms based on Single Carrier-Frequency Division Multiple Access (SC-FDMA) or Discrete Fourier Transform (DFT)-Spread-OFDM (DFT-S-OFDM), or may be other signal waveforms. Code Division Multiple Access (CDMA) may be applied to the DL and/or the UL.

### <Radio Base Station>

FIG. 1 is a block diagram illustrating an example of the entire configuration of radio base station 10 according to the embodiment of the invention. Radio base station 10 illustrated in FIG. 1 includes scheduler 101, transmission signal generation section 102, coding and modulation section 103, mapping section 104, transmission section 105, antenna 106, reception section 107, control section 108, channel estimation section 109, and demodulation and decoding section 110.

Scheduler 101 performs scheduling (for example, resource allocation) of the DL signals (the DL data signals, the DL control signals, the DMRSs, and the like). Scheduler 101 performs scheduling (for example, resource allocation) of the UL signals (the UL data signals, the UL control signals, the DMRSs, and the like).

When the communication between radio base station 10 and user terminal 20 is performed by using the single carrier, scheduler 101 performs scheduling for allocating the signal to a radio resource in the time domain (time direction) of the single carrier.

In the scheduling, scheduler 101 configures transmission periods of the physical control channels of the DL and transmission periods of the physical data channels of the DL. Scheduler 101 performs the scheduling of the DL signals in the configured transmission periods.

Note that, scheduler 101 may configure reception periods of the physical control channels of the UL and reception periods of the physical data channels of the UL. In this case, scheduler 101 performs the scheduling of the UL signals in the configured reception periods.

Note that, a specific example of the configurations of the physical control channels and the physical data channels will be described below.

Scheduler 101 outputs scheduling information including information of the resource allocation to transmission signal generation section 102 and mapping section 104.

For example, scheduler 101 configures Modulation and Coding Scheme (MCS) (a coding rate, a modulation scheme, or the like) of the DL data signals and the UL data signals based on channel quality between radio base station 10 and user terminal 20, and outputs MCS information to transmission signal generation section 102 and coding and modulation section 103. Note that, the MCS may not be configured by radio base station 10, and may be configured by user terminal 20. When user terminal 20 configures the MCS, radio base station 10 may receive the MCS information from user terminal 20 (not illustrated).

Transmission signal generation section 102 generates the DL signals including the DL data signals and the DL control signals. For example, Downlink Control Information (DCI) including the scheduling information (for example, the resource allocation information of the DL data signals) or the MCS information output from scheduler 101 is included in the DL control signals. Transmission signal generation section 102 outputs the generated transmission signals to coding and modulation section 103.

For example, coding and modulation section 103 performs coding processing and modulation processing for the transmission signals input from transmission signal generation section 102 based on the MCS information input from scheduler 101. Coding and modulation section 103 outputs the modulated transmission signals to mapping section 104.

Mapping section 104 maps the transmission signals input from coding and modulation section 103 to a predetermined radio resource based on the scheduling information (for example, the resource allocation of the DL) input from scheduler 101. Mapping section 104 maps the reference signals (for example, the DMRSs) to a predetermined radio resource based on the scheduling information. Mapping section 104 outputs the DL signals mapped to the radio resource to transmission section 105.

Transmission section 105 performs transmission processing such as up-conversion or amplification on the DL signals input from mapping section 104, and transmits the radio frequency signals (DL signals) through antenna 106.

Reception section 107 performs reception processing such as amplification or down-conversion on the radio frequency signals (UL signals) received by antenna 106, and outputs the UL signals to control section 108.

Control section 108 separates (demaps) the UL data signals and the DMRSs from the UL signals input from reception section 107 based on the scheduling information input from scheduler 101. Control section 108 outputs the UL data signals to demodulation and decoding section 110, and outputs the DMRSs to channel estimation section 109.

Channel estimation section 109 performs channel estimation by using the DMRSs of the UL signals, and outputs a channel estimation value which is an estimation result to demodulation and decoding section 110.

Demodulation and decoding section 110 performs demodulation and decoding processing on the UL data signals input from control section 108 based on the channel estimation value input from channel estimation section 109. Demodulation and decoding section 110 transmits the demodulated UL data signals to an application section (not illustrated). Note that, the application section performs processing related to a layer higher than a physical layer or a MAC layer.

### <User Terminal>

FIG. 2 is a block diagram illustrating an example of the entire configuration of user terminal 20 according to the present embodiment. User terminal 20 illustrated in FIG. 2 includes antenna 201, reception section 202, control section 203, channel estimation section 204, demodulation and decoding section 205, transmission signal generation section 206, coding and modulation section 207, mapping section 208, and transmission section 209.

Reception section 202 performs reception processing such as amplification or down-conversion on the radio frequency signals (DL signals) received by antenna 201, and outputs the DL signals to control section 203. At least the DL control signals, the DL data signals, and the DMRSs are included in the DL signals.

Control section 203 configures reception periods (monitoring periods) of the physical control channels of the DL. Control section 203 separates (demaps) the DL control signals from the DL signals output from reception section 202 in the configured reception periods of the physical control channels of the DL. Control section 203 separates (demaps) the DMRSs from the DL signals. Control section 203 outputs the DL control signals to demodulation and decoding section 205, and outputs the DMRSs to channel estimation section 204.

Control section 203 separates (demaps) the DL data signals from the DL signals based on the scheduling information (for example, the resource allocation information of the DL) input from demodulation and decoding section 205, and outputs the DL data signals to demodulation and decoding section 205.

Channel estimation section 204 performs channel estimation by using the separated DMRSs, and outputs a channel estimation value which is an estimation result to demodulation and decoding section 205.

Demodulation and decoding section 205 demodulates the DL control signals input from control section 203. Demodulation and decoding section 205 performs decoding processing (for example, monitoring processing (blind detection processing)) on the demodulated DL control signals. Demodulation and decoding section 205 outputs the scheduling information (the resource allocation of the DL/UL) addressed to the user terminal which is obtained by decoding the DL control signals to control section 203 and mapping section 208, and outputs the MCS information for the UL data signals to coding and modulation section 207.

Demodulation and decoding section 205 performs demodulation and decoding processing on the DL data signals input from control section 203 by using the channel estimation value input from channel estimation section 204 based on the MCS information for the DL data signals included in the DL control signals input from control section 203. Demodulation and decoding section 205 transmits the demodulated DL data signals to an application section (not illustrated). Note that, the application section performs processing related to a layer higher than a physical layer or a MAC layer.

Transmission signal generation section 206 generates the transmission signals (the UL data signals or the UL control signals), and outputs the generated transmission signals to coding and modulation section 207.

For example, coding and modulation section 207 performs coding processing and modulation processing for the transmission signals input from transmission signal generation section 206 based on the MCS information input from demodulation and decoding section 205. Coding and modulation section 207 outputs the modulated transmission signals to mapping section 208.

Mapping section 208 maps the transmission signals input from coding and modulation section 207 to a predetermined radio resource based on the scheduling information (the resource allocation of the UL) input from demodulation and decoding section 205. Mapping section 208 maps the reference signals (for example, the DMRSs) to a predetermined radio resource based on the scheduling information.

Transmission section 209 performs transmission processing such as up-conversion or amplification on the UL signals (including at least the UL control signals, the UL data signals, and the DMRSs) input from mapping section 208, and transmits the radio frequency signals (UL signals) through antenna 201.

As stated above, radio base station 10 configures transmission periods of the physical control channels of the DL, maps the DL control signals in the configured transmission periods, and transmits the DL control signals included in the physical control channels. User terminal 20 configures the transmission periods and/or transmittable periods of the physical control channels of the DL configured by radio base station 10 as monitoring periods, and receives the DL control signals included in the physical control channels in the configured monitoring periods.

Hereinafter, a specific example of the transmission periods of the physical control channels of the DL configured by radio base station 10 and the transmission signals transmitted by radio base station 10 based on this configuration will be described.

Note that, hereinafter, the transmission/reception of the signals included in the physical control channels is appropriately described as the transmission/reception of the physical control channels. Similarly, the transmission/reception of the signals included in the physical data channels is appropriately described as the transmission/reception of the physical data channels.

### [First Example]

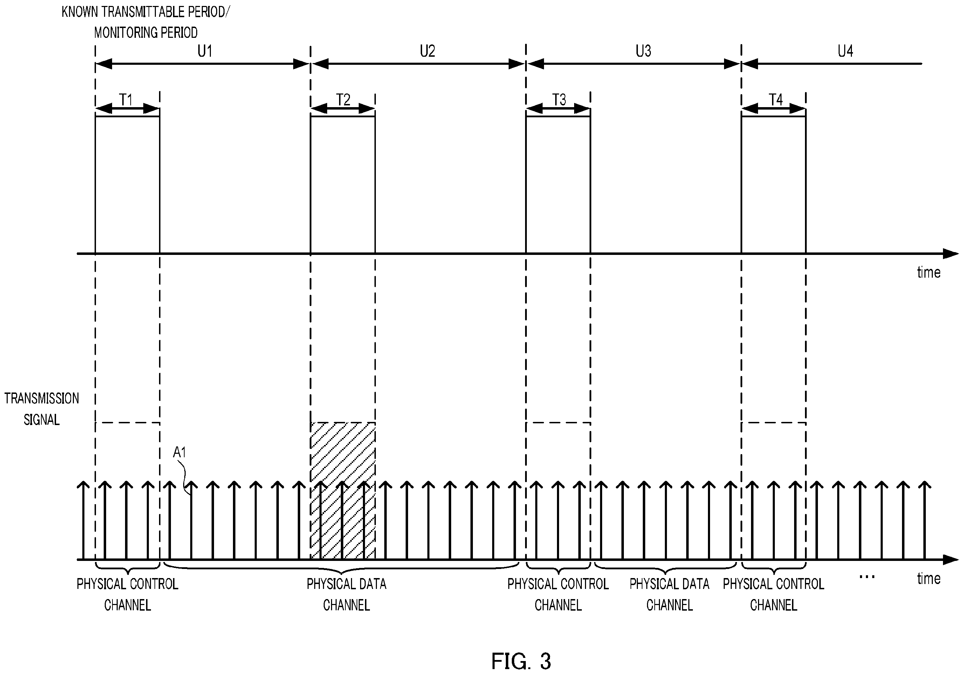

FIG. 3 is a diagram illustrating an example of transmittable periods of physical control channels and transmission signals according to a first example of the present embodiment. The transmittable periods and the transmission signals are illustrated in FIG. 3. A horizontal axis illustrated in FIG. 3 represents a time axis.

Arrows A1 in the transmission signals illustrated in FIG. 3 represent transmission points at which the DL signals are transmitted using the single carrier. Hereinafter, the transmission points represented by the arrows A1 may be referred to as sample points. An interval between the sample points is "1/system bandwidth," for example. Note that, the transmission points represented by the arrows A1 of FIG. 3 may also be referred to as subcarriers, tones, resource elements, components, symbols, mini symbols, or samples. That is, the transmission points represented by the arrows A1 of FIG. 3 are not limited to the name of the sample points. The transmission points are not limited to the names described above.

In FIG. 3, period T1 to period T4 are the transmittable periods of the physical control channels, respectively. The transmittable period of the physical control channels is a period in which radio base station 10 can transmit the physical control channels. In the transmittable period of the physical data channels, radio base station 10 may transmit the physical control channels or may transmit the physical data channels.

Interval U1 between period T1 and period T2, interval U2 between period T2 and period T3, interval U3 between period T3 and period T4, and interval U4 between period T4 and the next transmittable period (not illustrated) of period T4 are illustrated in FIG. 3. In FIG. 3, period T1 to period T4 have the same length, and interval U1 to interval U4 have the same length. That is, FIG. 3 illustrates an example in which the transmittable periods each having a predetermined length are provided at a predetermined interval.

Information indicating period T1 to period T4, for example, information indicating the lengths of period T1 to period T4 and information indicating the lengths of interval U1 to interval U4 are known in radio base station 10 and user terminal 20.

The lengths (intervals) of interval U1 to interval U4 may be determined by the specification, or may be notified by using the signals of the higher layer and/or broadcast information (for example, Master Information Block (MIB) and/or System Information Block (SIB)). The lengths (intervals) of period T1 to period T4 may be determined by the specification, or may be notified by using the signals of the higher layer and/or the broadcast information (for example, MIB and/or SIB).

Scheduler 101 determines whether to transmit the physical control channels or transmit the physical data channels in each of period T1 to period T4.

This determination is performed according to, for example, requirements (for example, a communication speed, communication capacity, and a delay time of the system, and the number of user terminals 20 connected to radio base station 10) of the radio communication system.

For example, this determination may be performed based on the size of the control information to be transmitted to user terminal 20 and requirements of user terminal 20 such as a communication speed required by user terminal 20. For example, when the size of the control information is equal to or larger than a predetermined value, scheduler 101 determines to transmit the physical control channels in order to secure a longer transmission period of the physical control channels. When the communication speed required by user terminal 20 is equal to or higher than a predetermined speed, scheduler 101 determines to transmit the physical data channels in order to secure a longer transmission period of the physical data channels.

Scheduler 101 configures period T1 to period T4 as the transmission periods of the physical control channels or the transmission periods of the physical data channels according this determination. Scheduler 101 configures the transmission periods except for period T1 to period T4 as the transmission periods of the physical data channels. Scheduler 101 performs the scheduling of the DL signals in the configured transmission periods. As the scheduling result of scheduler 101, radio base station 10 transmits the physical control channels or the physical data channels in the transmission periods including period T1 to period T4.

In the example of FIG. 3, radio base station 10 transmits the physical control channels in period T1, period T3, and period T4, and transmits the physical data channels in a period including period T2 in which the physical control channels are not transmitted.

Note that, it has been described in FIG. 3 that the physical control channels and the physical data channels do not overlap each other on the time axis. However, the physical control channels and the physical data channels may overlap each other on the time axis by using at least one multiplexing means of Code Division Multiplexing (CDM), Frequency Division Multiplexing (FDM), and layer multiplexing.

Demodulation and decoding section 205 of user terminal 20 configures period T1 to period T4 as the monitoring periods based on the known information indicating period T1 to period T4. Demodulation and decoding section 205 demodulates the signals received in each of period T1 to period T4, performs monitoring processing (blind detection processing) on the demodulated signals, and extracts the DL control signals included in the physical control channels.

When the DL control signals are not included in the channels of the monitoring periods as the result of the monitoring processing, demodulation and decoding section 205 determines that the channels transmitted in the periods except for the monitoring periods and the channels of the monitoring period (period T2 in the example of FIG. 3) in which the DL control signals are not included are the physical data channels. Demodulation and decoding section 205 performs the demodulation and decoding processing on the DL data signals included in the physical data channels.

### <Advantageous Effects of First Example>

According to the aforementioned first example, radio base station 10 can flexibly change the configuration (for example, the length and/or the timing) of the physical control channels according to the requirements of the radio communication system or the like. In the first example, the transmittable periods of the physical control channels of radio base station 10 (that is, the monitoring periods of user terminal 20) are known in radio base station 10 and user terminal 20. Thus, radio base station 10 does not need to dynamically notify user terminal 20 of information indicating the configuration of the physical control channels, and user terminal 20 can easily perform the monitoring. Thus, it is possible to reduce the overhead of signaling.

Note that, although it has been described in FIG. 3 that period T1 to period T4 have the same length and interval U1 to interval U4 have the same length, the present invention is not limited thereto. As long as the lengths of period T1 to period T4 and the lengths of interval U1 to interval U4 are known in radio base station 10 and user terminal 20, the lengths of the periods may be different from each other, and the lengths of the intervals may be different from each other.

Although it has been described that radio base station 10 determines whether to transmit the physical control channels or transmit the physical data channels in each of period T1 to period T4, the present invention is not limited thereto.

For example, at least one period of the plurality of transmittable periods may be configured as the period in which the physical control channels are transmitted (that is, the period in which the physical data channels are not transmitted) in advance. Accordingly, even though user terminal 20 fails to receive the physical control channels (for example, fails to perform the demodulation and decoding processing on the DL control signals), since the user terminal can receive the next physical control channels, it is possible to avoid a situation in which the physical control channels cannot be continuously received.

For example, radio base station 10 may transmit the physical control channels in a partial period as a part of the transmittable period, and may transmit the physical data channels in the remaining partial period. Accordingly, radio base station 10 can flexibly change the configuration of the physical control channels.

For example, the plurality of transmittable periods (period T1 to period T4 in FIG. 3) may be continuously provided, and radio base station 10 may transmit the physical control channels in at least one period of the plurality of continuous transmittable periods. Apart of the plurality of transmittable periods may overlap each other on the time axis.

Scheduler 101 may determine whether to transmit any of the physical control channels and the physical data channels or not to transmit any thereof in each transmittable period. For example, when scheduler 101 determines not to transmit any thereof in period T2 of FIG. 3, period T2 of the transmission signal of FIG. 3 becomes a non-transmission period instead of the transmission period of the physical data channels. In this case, demodulation and decoding section 205 of user terminal 20 determines that any signal is not transmitted as the result of the monitoring result of period T2.

At least one of the transmittable periods is provided as the non-transmission period, and thus, the non-transmission period serves as a guard interval. Accordingly, it is possible to restrain interference of a delay wave or the like.

Two or more periods of the period in which the physical control channels are transmitted, the period in which the physical data channels are transmitted, and the period in which the signals are not transmitted may be included in one transmittable period. That is, the period in which any of the DL control signal and the DL data signal is not mapped may be included in a part of one transmittable period.

Although the DL signal transmitted by radio base station 10 to user terminal 20 has been described as the example in the aforementioned first example, the present invention is not limited thereto. The aforementioned first example may be applied to the UL signal transmitted by user terminal 20 to radio base station 10.

For example, scheduler 101 of radio base station 10 determines whether to receive the physical control channels of the UL or receive the physical data channels of the UL in each of known receivable periods of the physical control channels of the UL. Scheduler 101 configures the known receivable periods of the physical control channels of the UL as the reception periods of the physical control channels of the UL or the reception periods of the physical data channels of the UL according to this determination. Scheduler 101 configures the reception periods except for the known receivable periods of the physical control channels of the UL as the reception periods of the physical data channels of the UL. Scheduler 101 performs the scheduling of the UL signals in the configured reception periods.

### [Second Example]

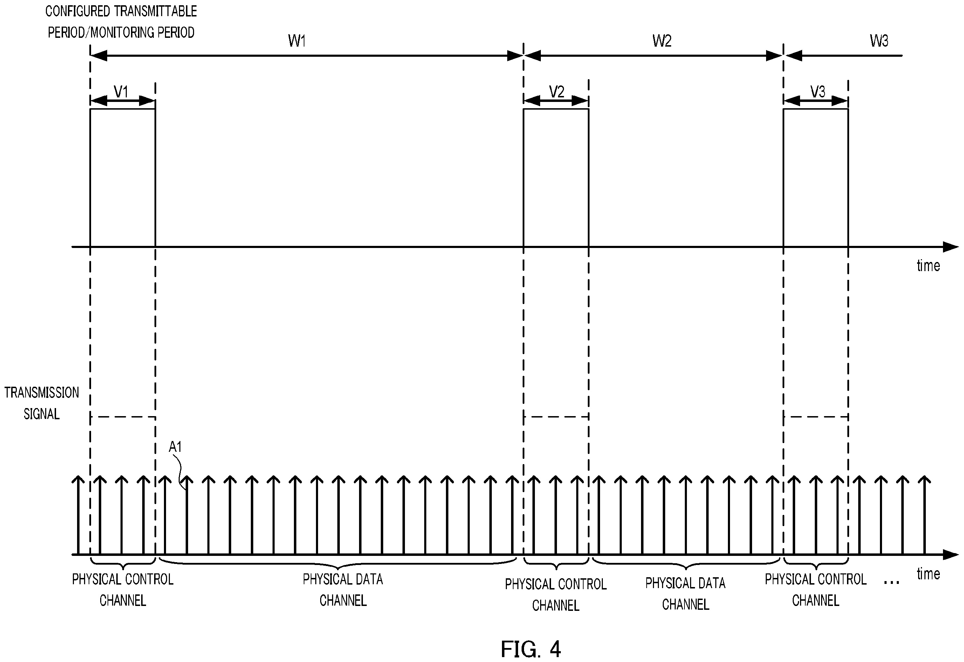

FIG. 4 is a diagram illustrating an example of transmission periods of physical control channels and transmission signals according to a second example of the present embodiment. In FIG. 4, the configured transmission periods and the transmission signals are illustrated. A horizontal axis illustrated in FIG. 4 represents a time axis. Similarly to the arrows A1 illustrated in FIG. 3, arrows A1 in the transmission signals illustrated in FIG. 4 represent transmission points at which the DL signals are transmitted using the single carrier.

In FIG. 4, period V1 to period V3 are the transmission periods of the physical control channels, respectively. Interval W1 between period V1 and period V2, interval W2 between period V2 and period V3, and interval W3 between period V3 and the next transmittable period (not illustrated) of period V3 are illustrated in FIG. 4.

Lengths of period V1 to period V3 are known in radio base station 10 and user terminal 20. For example, in FIG. 4, period V1 to period V3 have the same length.

Scheduler 101 configures the transmission intervals between the physical control channels, that is, configures interval W1, interval W2, and interval W3 in FIG. 4. This configuration is performed according to, for example, the requirements (for example, the communication speed, the communication capacity, and the delay time of the system, and the number of user terminals 20 connected to radio base station 10) of the radio communication system. Information indicating each interval is notified to user terminal 20 as information indicating the transmission period of the physical control channels.

Scheduler 101 configures period V1 to period V3 as the transmission periods of the physical control channels and configures the periods except for period V1 to period V3 as the transmission periods of the physical data channels based on the configured transmission intervals and the known lengths of period V1 to period V3. Scheduler 101 performs the scheduling of the DL signals in the configured transmission periods. As the scheduling result of scheduler 101, radio base station 10 transmits the physical control channels or the physical data channels in the transmission periods including period V1 to period V3.

User terminal 20 obtains the information indicating the transmission period of the physical control channels from radio base station 10. Demodulation and decoding section 205 of user terminal 20 configures period V1 to period V3 as the monitoring periods based on the transmission intervals between the physical control channels included in the obtained information and the known lengths of period V1 to period V3. Demodulation and decoding section 205 performs the demodulation and decoding processing on the DL control signals received in each of period V1 to period V3, and extracts the DL control signals included in the physical control channels. Demodulation and decoding section 205 performs the demodulation and decoding processing on the DL data signals included in the physical data channels in the periods except for period V1 to period V3.

### <Advantageous Effects of Second Example>

According to the aforementioned second example, radio base station 10 can flexibly change the configuration (for example, the length and/or the timing) of the physical control channels according to the requirements of the radio communication system or the like. In the second example, since radio base station 10 (scheduler 101) can flexibly change the length of the transmission period of the physical data channels by changing the interval between the transmission periods of the physical control channels, it is possible to more flexibly change the configurations of the physical control channels and the physical data channels according to the requirements of user terminal 20. In the second example, since the information indicating the transmission periods of the physical control channels is notified to user terminal 20, user terminal 20 does not need to perform the monitoring processing (blind detection processing) on the DL control signals included in the physical control channels.

Note that, the information indicating the transmission period of the physical control channels may be notified to each user terminal 20 by higher layer (for example, Radio Resource Control (RRC) or Medium Access Control (MAC)) signaling, or may be notified to each user terminal 20 by physical layer (PHY) signaling.

For example, the information indicating the transmission period of the physical control channels may be a value of the transmission interval (time or the number of samples). Alternatively, radio base station 10 and user terminal 20 may store a correspondence between a plurality of configurable transmission intervals and indices represented in Table 1, and radio base station 10 may notify user terminal 20 of the index indicating the transmission period. For example, the method of notifying of the index can further reduce the overhead of the signaling as compared to the method of notifying the value of the transmission interval (time or the number of samples).

**[Table 1]**

| Index | Transmission Interval |
|---|---|
| 0 | 100 ns |
| 1 | 400 ns |
| 2 | 800 ns |
| 3 | 1600 ns |

Note that, when the information indicating the transmission period of the physical control channels is not notified, user terminal 20 may perform the monitoring processing based on the information indicating the transmission period of the physical control channels which is notified by default configuration information or broadcast information (Master Information Block (MIB)) and/or System Information Block (SIB)).

Although it has been described in the aforementioned second example that the information indicating the lengths of interval W1 to interval W3 is notified and the lengths of period V1 to period V3 are the known values, the present invention is not limited thereto. For example, radio base station 10 may configure the lengths of interval W1 to interval W3 and the lengths of period V1 to period V3. In this case, radio base station 10 notifies user terminal 20 of the information indicating the configured length of each interval, and the information indicating the length of each period as the information indicating the transmission period of the physical control channels.

Although the DL signal transmitted by radio base station 10 to user terminal 20 has been described as the example in the aforementioned second example, the present invention is not limited thereto. The aforementioned second example may be applied to the UL signal transmitted by user terminal 20 to radio base station 10.

For example, scheduler 101 of radio base station 10 configures reception intervals between the reception periods of the physical control channels of the UL, and configures the reception periods of the physical control channels of the UL based on the configured reception intervals and the known lengths of the reception periods of the physical control channels of the UL. Scheduler 101 configures the periods except for the configured reception periods of the physical control channels as the reception periods of the physical data channels of the UL. Scheduler 101 performs the scheduling of the UL signals in the configured reception periods.

### [Third Example]

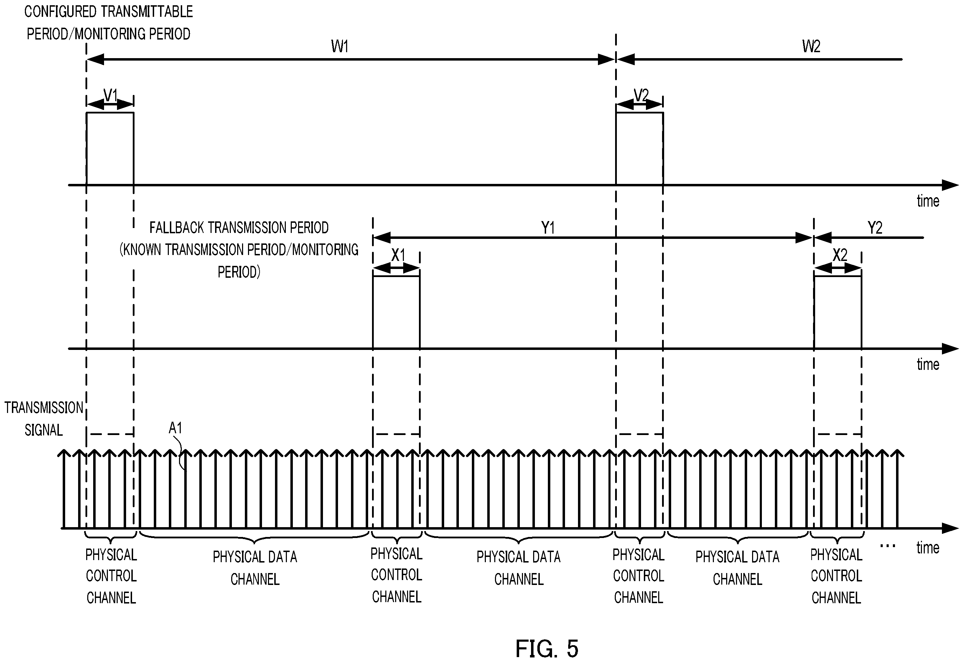

FIG. 5 is a diagram illustrating an example of transmission periods of physical control channels and transmission signals according to a third example of the present embodiment. Configured transmission periods, fallback transmission periods, and transmission signals are illustrated in FIG. 5. A horizontal axis illustrated in FIG. 5 represents a time axis. Similarly to the arrows A1 illustrated in FIG. 3, arrows A1 in the transmission signals illustrated in FIG. 5 represent transmission points at which the DL signals are transmitted on the single carrier.

In FIG. 5, period V1 and period V2 are the transmission periods of the physical control channels, respectively. Interval W1 between period V1 and period V2 and interval W2 between period V2 and the next transmittable period (not illustrated) of period V2 are illustrated in FIG. 5.

In FIG. 5, period X1 and period X2 are the fallback transmission periods of the physical control channels, respectively. Interval Y1 between period X1 and period X2 and interval Y2 between period X2 and the next fallback transmission period (not illustrated) of period X2 are illustrated in FIG. 5.

Similarly to the aforementioned second example, information indicating period V1 and period V2 which are the transmission periods of the physical control channels, for example, information indicating the lengths of interval W1 and interval W2 are notified to user terminal 20 from radio base station 10. The lengths of period V1 and period V2 are known in radio base station 10 and user terminal 20.

Information indicating period X1 and period X2 which are the fallback transmission periods of the physical control channels, for example, information indicating the lengths of period X1 and period X2 and information indicating the lengths of interval Y1 and interval Y2 are known in radio base station 10 and user terminal 20.

Scheduler 101 configures the transmission intervals between the physical control channels, that is, interval W1 and interval W2 in FIG. 5. This configuration is performed according to, for example, the requirements (for example, the communication speed, the communication capacity, and the delay time of the system, and the number of user terminals 20 connected to radio base station 10) of the radio communication system. Information indicating each interval is notified to user terminal 20 as the information indicating the transmission period of the physical control channels.

Scheduler 101 configures period V1 and period V2 as the transmission periods of the physical control channels based on the configured transmission intervals and the known lengths of period V1 and period V2. Scheduler 101 configures period X1 and period X2 as the transmission periods of the physical control channels based on the known information indicating period X1 and period X2. Scheduler 101 configures the periods except for period V1, period V2, period X1, and period X2 as the transmission periods of the physical data channels. Scheduler 101 performs the scheduling of the DL signals in the configured transmission periods. As the scheduling result of scheduler 101, radio base station 10 transmits the physical control channels or the physical data channels in each transmission period.

User terminal 20 obtains the information indicating the transmission period of the physical control channels from radio base station 10. Demodulation and decoding section 205 of user terminal 20 configures period V1 and period V2 as the monitoring periods based on the transmission intervals between the physical control channels included in the obtained information and the known lengths of period V1 and period V2. Demodulation and decoding section 205 configures period X1 and period X2 as the monitoring periods based on the known information indicating period X1 and period X2. Demodulation and decoding section 205 performs the demodulation and decoding processing on the DL control signals received in period V1, period V2, period X1, and period X2, and extracts the DL control signals included in the physical control channels. Demodulation and decoding section 205 performs the demodulation and decoding processing on the DL data signals included in the physical data channels in the periods except for period V1, period V2, period X1, and period X2.

### <Advantageous Effects of Third Example>

According to the aforementioned third example, radio base station 10 can flexibly change the configuration (for example, the length and/or timing) of the physical control channels according to the requirements of the radio communication system or the like, and can receive the next physical control channels even when user terminal 20 fails to receive the physical control channels (for example, fails to perform the demodulating and decoding processing on the DL control signals).

For example, a case where user terminal 20 fails to receive the physical control channels in period V1 is illustrated in FIG. 5. In this case, even though user terminal 20 obtains the information indicating the length of interval W1 as the information indicating the transmission period of the physical control channels, since the user terminal fails to receive the physical control channels in period V1, the user terminal cannot configure period V2 which is the transmission period of the next physical control channels. As a result, user terminal 20 cannot also receive the physical control channels in period V2.

In the aforementioned third example, user terminal 20 configures period X1 and period X2 based on the information indicating the known fallback transmission period of the physical control channels. Accordingly, user terminal 20 can receive the physical control channels in period X1 and period X2 irrespective of the reception results of period V1 and period V2.

Note that, the lengths of the fallback transmission periods and the intervals between the fallback transmission periods are not particularly limited in the aforementioned third example. For example, the lengths of the fallback transmission periods and the intervals between the fallback transmission periods may be configured such that the fallback transmission intervals become periodic.

Note that, although the DL signals transmitted by radio base station 10 to user terminal 20 have been described as the example in the aforementioned third example, the present invention is not limited thereto. The aforementioned third example may be applied to the UL signals transmitted by user terminal 20 to radio base station 10.

### [Fourth Example]

It has been described in the aforementioned first example to third example that the transmission periods in which the physical control channels are transmitted are configured in the partial periods of signals transmitted by radio base station 10. Hereinafter, an example in which a plurality of search spaces are configured in the transmission periods in which the physical control channels are transmitted will be described in a fourth example.

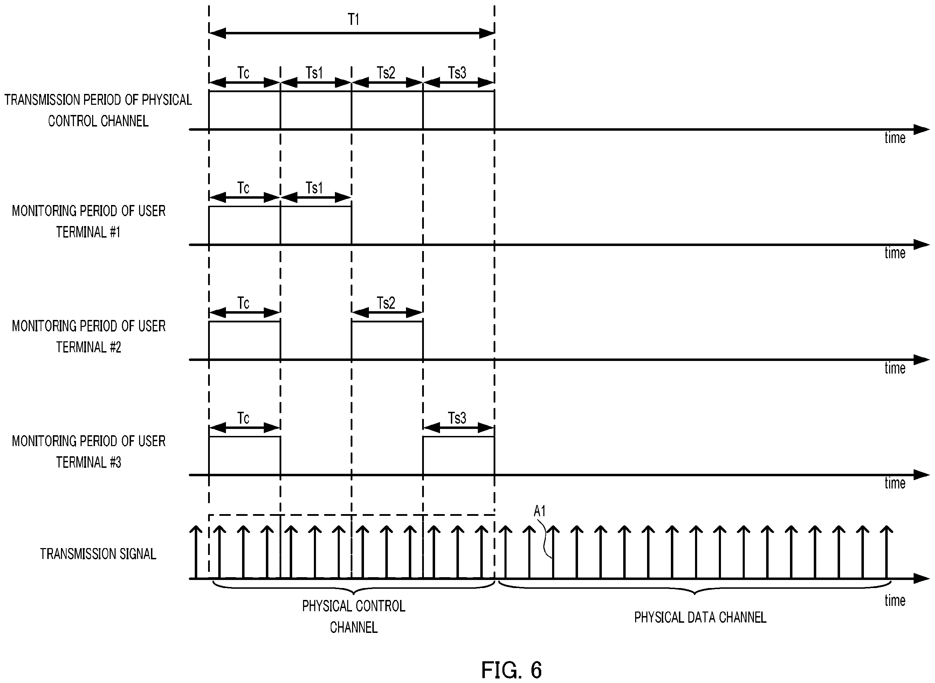

FIG. 6 is a diagram illustrating an example of transmission periods of physical control channels and transmission signals according to a fourth example of the present embodiment. In FIG. 6, transmission periods of physical control channels, monitoring periods of three user terminals 20 (hereinafter, referred to as user terminal #1, user terminal #2, and user terminal #3), and transmission signals are illustrated. A horizontal axis illustrated in FIG. 6 represents a time axis. Similarly to the arrows A1 illustrated in FIG. 3, arrows A1 in the transmission signals illustrated in FIG. 6 represent transmission points at which the DL signals are transmitted on the single carrier.

In FIG. 6, period T1 is the transmission period of the physical control channels. Partial period Tc included in period T1 is a common search space to user terminal #1 to user terminal #3. Partial period Ts1, partial period Ts2, partial period Ts3 included in period T1 are UE specific search spaces specific to user terminal #1 to user terminal #3, respectively.

Scheduler 101 configures period T1 as the transmission period of the physical control channels, and configures search spaces in period T1. Similarly to the aforementioned first example, this configuration may be known in radio base station 10 and each user terminal 20.

Alternatively, similarly to the aforementioned second example, scheduler 101 may sequentially configure the transmission period of the physical control channels and the search spaces within the transmission period of the physical control channels, and may notify each user terminal 20 of information indicating the configured transmission period and search spaces.

User terminal #1 configures the partial period Tc which is the common search space and partial period Ts1 which is the search space specific to user terminal #1, of the transmission period of the physical control channels, as the monitoring periods. Similarly, user terminal #2 configures partial period Tc and partial period Ts2 as the monitoring periods, and user terminal #3 configures partial period Tc and partial period Ts3 as the monitoring periods. Each of User terminal #1 to user terminal #3 demodulates the signals received in the configured monitoring periods, performs the monitoring processing (blind detection processing) on the demodulated signals, and extracts the DL control signals addressed to each user terminal which are included in the physical control channels. Each of user terminal #1 to user terminal #3 performs the demodulation and decoding on the DL data signals addressed to each user terminal which are included in the physical data channels in the periods except for period T1. The allocation of the DL data signals addressed to each user terminal in the physical data channels is included in the scheduling information addressed to each user terminal obtained by decoding the DL control signals.

### <Advantageous Effects of Fourth Example>

According to the aforementioned fourth example, radio base station 10 can flexibly change the configuration (for example, the length and/or the timing) of the physical control channels according to the requirements of the radio communication system or the like. In the fourth example, since radio base station 10 can distinguishably configure the common search space and the search spaces specific to user terminals 20 (UE specific search spaces), the radio base station can flexibly change the configuration of the physical control channels according to the requirements of each user terminal 20.

Note that, radio base station 10 may add a Cyclic Prefix (CP) to the DL signals to be transmitted to each user terminal 20, and radio base station 10 may transmit information regarding a parameter of a common CP in the common search space when a parameter (for example, a length of the CP, a position of the CP, and a copy source of the CP) of the CP is common to user terminals 20.

Although it has been described in FIG. 6 that the search space does not overlay each other, the present invention is not limited thereto. At least a part of the search space may overlap another search space. An interval at which another signals are transmitted may be provided between the search spaces.

Note that, although it has been described in the aforementioned embodiment that the physical control channels are the PDCCHs in the downlink and the PUCCHs in the uplink and the physical data channels are the PDSCHs in the downlink and the PUSCHs in the uplink, the present invention is not limited thereto. For example, Control-resource Set (CORESET) may be used as the physical control channels. Although it has been described that the control information is the DCI in the uplink and the UCI in the uplink, the present invention is not limited thereto.

The embodiments of the invention have been described above.

### (Hardware Configuration)

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

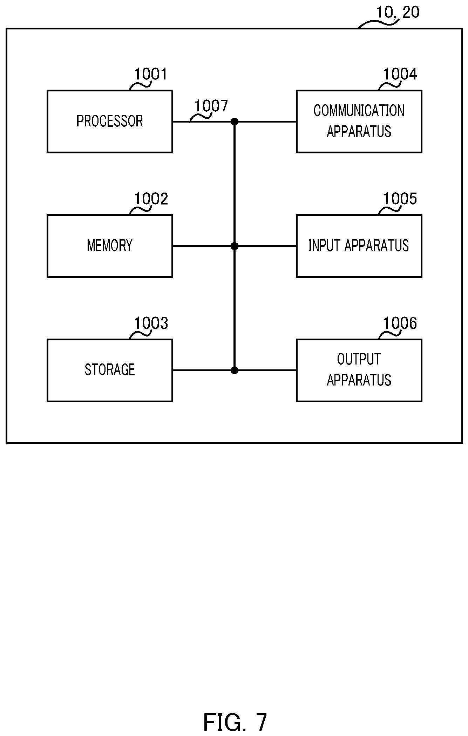

For example, the radio base station, the user terminal, and the like according to the embodiment of the present invention may function as a computer that executes processing of a radio communication method of the present invention. FIG. 7 is a diagram illustrating an example of a hardware configuration of the radio base station and the user terminal according to the embodiment of the present invention. Radio base station 10 and user terminal 20 as described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of radio base station 10 and of user terminal 20 may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in radio base station 10 and user terminal 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, scheduler 101, control sections 108 and 203, transmission signal generation sections 102 and 206, coding and modulation sections 103 and 207, mapping sections 104 and 208, channel estimation sections 109 and 204, demodulation and decoding sections 110 and 205 described above may be realized by processor 1001.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, scheduler 101 of radio base station 10 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to an embodiment of the present invention.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmission sections 105 and 209, antennas 106 and 201, reception sections 107 and 202, and the like may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, radio base station 10 and user terminal 20 may include hardware, such as a microprocessor, a Digital Signal Processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station," "eNB, "gNB," " "cell," and "sector" can be interchangeably used in the present specification. The base station may be called a fixed station, a NodeB, an eNodeB (eNB), gNodeB, an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. For example, the DMRS may be referred to as demodulation RS, DM-RS, or the like.

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, or the like) in the time domain.

The radio frame, the subframe, the slot, the mini slot, and the symbol indicate time units in transmitting signals. The radio frame, the subframe, the slot, the mini slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, one slot may be called a TTI, or one mini slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one mini slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the number of mini slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present invention has been described in detail, it is obvious to those skilled in the art that the present invention is not limited to the embodiments described in the present specification. Modifications and variations of the aspects of the present invention can be made without departing from the spirit and the scope of the present invention defined by the description of the appended claims. Therefore, the description of the present specification is intended for exemplary description and does not limit the present invention in any sense.

### Industrial Applicability

An aspect of the present invention is useful for a mobile communication system.

### Reference Signs List

- 10: Radio Base Station
- 20: User Terminal
- 101: Scheduler
- 102, 206: Transmission signal generation section
- 103, 207: Coding and modulation section
- 104, 208: Mapping section
- 105, 209: Transmission section
- 106, 201: Antenna
- 107, 202: Reception section
- 108, 203: Control section
- 109, 204: Channel estimation section
- 110, 205: Demodulation and decoding section

## Claims

1. A user terminal, comprising:
a reception section that receives a downlink signal including a downlink control signal and a downlink data signal from a radio base station; and
a demodulation and decoding section that performs demodulation and decoding on the downlink data signal, using the downlink control signal, wherein
any one of the downlink control signal and the downlink data signal is mapped to a known first period in the downlink signal, and the downlink data signal is mapped to a second period in the downlink signal, and
the demodulation and decoding section performs demodulation and blind decoding on the signal of the first period and extracts the downlink control signal.

2. The user terminal according to claim 1, wherein:
the first period includes a first partial period specific to the user terminal, and a second partial period common to a plurality of user terminals, and
the demodulation and decoding section extracts the downlink control signal from the first partial period and the second partial period.

3. The user terminal according to claim 1, wherein:
the downlink control signal is mapped to a known third period in the downlink signal, and
the demodulation and decoding section extracts the downlink control signal by performing demodulation and decoding on the signal of the third period.

4. The user terminal according to claim 1, wherein:
the first period includes a period in which neither the downlink control signal nor the downlink data signal is mapped.

5. A radio communication method, comprising:
receiving a downlink signal including a downlink control signal and a downlink data signal from a radio base station; and
performing demodulation and decoding on the downlink data signal, using the downlink control signal, wherein
any one of the downlink control signal and the downlink data signal is mapped to a known first period in the downlink signal, and the downlink data signal is mapped to a second period in the downlink signal, and
demodulation and blind decoding is performed on the signal of the first period and the downlink control signal is extracted.
